# EUROPEAN PATENT APPLICATION

(11) **EP 4 659 644 A1**
(43) Date of publication of application: **10.12.2025**
(21) Application number: 23919504.3
(22) Date of filing: 14.12.2023
(51) Int. Cl.: A47L 11/30, A47L 11/40, G01B 7/30

(54) **SMART FLOOR CLEANING MACHINE AND CONTROL METHOD FOR FLOOR CLEANING MACHINE**

(30) Priority: 01.02.2023 CN 202310145839
(71) Applicant: Yunjing Intelligence (Shenzhen) Co., Ltd., Shenzhen, Guangdong 518000 (CN); Yunjing Intelligence Innovation (Shenzhen) Co., Ltd., Shenzhen, Guangdong 518000 (CN)
(72) Inventor: HU, Hongwei, Shenzhen, Guangdong 518000 (CN); LU, Jiawei, Shenzhen, Guangdong 518000 (CN); CHANG, Jian, Shenzhen, Guangdong 518000 (CN)
(74) Representative: Metida
(86) International application number: PCT/CN2023/138908
(87) International publication number: WO 2024/159942

(57) **Abstract**

The present application provides a smart floor cleaning device (1000) and a control method thereof. The smart floor cleaning device (1000) includes a body (10), a chassis (20), a processor, a negative pressure source, and a sewage tank on the body (10). The negative pressure source is connected to the sewage tank and applies a negative pressure source to draw sewage during cleaning into the sewage tank. The smart floor cleaning device (1000) further includes an angle detection device (30) on the body (10) and/or the chassis (20). The processor is electrically connected to the angle detection device (30) and obtains a rotation angle of the body (10) around the first axis and/or the second axis based on a detection signal from the angle detection device (30). The first axis and second axis are perpendicular to each other. The processor is electrically connected to the negative pressure source and controls the output power of the negative pressure source based on the rotation angle.

## Description

### FIELD

The subject matter herein generally relates to the field of floor cleaning devices, and more particularly, to a smart floor cleaning device and a control method for the floor cleaning device.

### BACKGROUND

A floor cleaning device is a cleaning device suitable for cleaning hard floors, absorbing sewage, and removing the sewage from the site. The floor cleaning device has advantages of environmental protection, energy saving, and high efficiency. When cleaning low areas (e.g., areas under the furniture such as desks, sofas, coffee tables, bedside tables, beds, etc.), the existing floor cleaning device may power off a negative pressure source to prevent water from entering the negative pressure source, which will result in poor cleaning effect.

Therefore, there is room for improvement and development in the arts.

### SUMMARY

A smart floor cleaning device and a control method for the floor cleaning device are provided in the present application, which may improve the cleaning effect when cleaning low areas by the floor cleaning device.

The present application provides a smart floor cleaning device, including a body, a chassis, a processor, a negative pressure source, and a sewage tank installed on the body. The negative pressure source is connected to the sewage tank and configured to apply a negative pressure source to draw sewage during a cleaning process into the sewage tank. The smart floor cleaning device further includes an angle detection device.

The body is hinged to the chassis, the processor is installed on the body or the chassis, and the body is configured to rotate around a first axis and a second axis.

The angle detection device is installed on at least one of the body and the chassis, the processor is electrically connected to the angle detection device and configured to obtain a rotation angle of the body rotating around at least one of the first axis and the second axis based on a detection signal of the angle detection device.

The negative pressure source is electrically connected to the processor, and the processor is further configured to control an output power of the negative pressure source based on the rotation angle.

The first axis and the second axis are perpendicular to each other.

In the smart floor cleaning device according to some embodiments of the present application, the angle detection device includes a magnetic component and a Hall sensor.

One of the magnetic component and the Hall sensor is installed on the body, another one of the magnetic component and the Hall sensor is installed on the chassis, the processor is electrically connected to the Hall sensor and configured to obtain the rotation angle of the body around at least one of the first axis and the second axis based on a signal intensity from the Hall sensor.

In the smart floor cleaning device according to some embodiments of the present application, the magnetic component includes a first magnetic component and a second magnetic component, the Hall sensor includes a first Hall sensor corresponding to the first magnetic component and at least one second Hall sensor corresponding to the second magnetic component;

The rotation angle includes a pitch angle of the body rotating about the first axis and a twist angle of the body rotating about the second axis;

One of the first magnetic component and the first Hall sensor is installed on the body, another one of the first magnetic component and the first Hall sensor is installed on the chassis, the processor is electrically connected to the first Hall sensor and configured to obtain the twist angle based on a first signal intensity from the first Hall sensor;

One of the second magnetic component and the at least one second Hall sensor is installed on the body, another one of the second magnetic component and the at least one second Hall sensor is installed on the chassis, the processor is electrically connected to the at least one second Hall sensor and configured to obtain the pitch angle based on a second signal intensity from the at least one second Hall sensor.

In the smart floor cleaning device according to some embodiments of the present application, the at least one second Hall sensor includes two second Hall sensors;

The two second Hall sensors are installed on the chassis, and the second magnetic component is installed on the body.

In the smart floor cleaning device according to some embodiments of the present application, the second magnetic component is an annular magnet;

An angle defined by lines connecting each of the two second Hall sensors to a centerline of the annular magnet is greater than 0° and less than or equal to 98°.

In the smart floor cleaning device according to some embodiments of the present application, the at least one second Hall sensor includes two second Hall sensors;

The two second Hall sensors are installed on the body, and the second magnetic component is installed on the chassis.

In the smart floor cleaning device according to some embodiments of the present application, the first magnetic component is installed on the chassis, the first Hall sensor is installed on the body, and the first Hall sensor outputs the detection signal having the signal intensity of zero when the twist angle is equal to 0°.

In the smart floor cleaning device according to some embodiments of the present application, the first magnetic component is an arc-shaped magnet with a curvature greater than or equal to 120°, and the first Hall sensor faces a middle position of the first magnetic component when the twist angle is equal to 0°.

In the smart floor cleaning device according to some embodiments of the present application, the first magnetic component is installed on the body, the first Hall sensor is installed on the chassis, and the first Hall sensor outputs the detection signal having the signal intensity of zero when the twist angle is equal to 0°.

The present application further provides a control method for the above floor cleaning device. The method includes:
obtaining the detection signal from the angle detection device, and obtaining the rotation angle of the body rotating around at least one of the first axis and the second axis based on the detection signal;
controlling the output power of the negative pressure source based on the rotation angle.

In the control method for the floor cleaning device according to some embodiments of the present application, obtaining the detection signal of the angle detection device, and obtaining the rotation angle of the body around at least one of the first axis and the second axis based on the detection signal including:
obtaining a first signal intensity from a first Hall sensor in the angle detection device, and obtaining a twist angle of the body rotating around the second axis based on the first signal intensity; and
obtaining a second signal intensity from the second Hall sensor in the angle detection device, and obtaining a pitch angle of the body rotating around the first axis based on the second signal intensity;
controlling the output power of the negative pressure source based on the rotation angle includes:
   controlling the output power of the negative pressure source based on the pitch angle and the twist angle.

In the control method for the floor cleaning device according to some embodiments of the present application, before controlling the output power of the negative pressure source based on the pitch angle and the twist angle, the control method further includes:
obtain a plurality of preset pitch angle ranges and a plurality of preset twist angle ranges;
comparing the pitch angle with the plurality of preset pitch angle ranges to determine a target preset pitch angle range from the plurality of preset pitch angle ranges which contains the pitch angle; and
comparing the twist angle with the plurality of preset twist angle ranges to determine a target preset twist angle range from the plurality of preset twist angle ranges which contains the twist angle;
controlling the output power of the negative pressure source based on the pitch angle and the twist angle includes:
   controlling the output power of the negative pressure source based on the target preset pitch angle range and the target preset twist angle range.

In the control method for the floor cleaning device according to some embodiments of the present application, controlling the output power of the negative pressure source based on the target preset pitch angle range and the target preset twist angle range includes:
obtaining a mapped output power corresponding to the target preset pitch angle range and the target preset twist angle range based on a preset mapping relationship;
determining the mapped output power as the output power of the negative pressure source.

In the control method for the floor cleaning device according to some embodiments of the present application, the smaller the target preset pitch angle range and the larger the target preset twist angle range, the smaller the corresponding mapped output power.

In the control method for the floor cleaning device according to some embodiments of the present application, after determining the mapped output power as the output power of the negative pressure source, the control method further includes:
obtain a time duration in which the body maintains at the target preset pitch angle range and the target preset twist angle range;
comparing the time duration with a preset time duration;
maintaining the output power of the negative pressure source unchanged in response to the time duration being less than the preset time duration; and
determining the mapped output power as the output power of the negative pressure source in response to the time duration being greater than the preset time duration.

In the smart floor cleaning device according to the embodiments of the present application, by adding the angle detection device and electrically connecting the angle detection device to the processor of the smart floor cleaning device, the angle detection device obtains the rotation angle of the body of the smart floor cleaning device around the first axis and/or the second axis. That is, when the body rotates around the first axis and/or the second axis, the detection signal of the angle detection device will change. At this time, the processor collects the detection signal of the angle detection device, and then obtains the rotation angle of the body around the first axis and/or the second axis based on the detection signal. Finally, the output power of the negative pressure source is controlled based on the rotation angle. Therefore, when cleaning low areas with the floor cleaning device, there is no need to power off the negative pressure source. The output power of the negative pressure source may be adjusted according to the rotation angle, thereby greatly improving the cleaning effect.

### BRIEF DESCRIPTION OF THE DRAWINGS

In order to explain the technologies of the embodiments of the present application more clearly, the following accompanying drawings are briefly described. Obviously, the accompanying drawings are only some embodiments of the present application. For those skilled in the field, other drawings can be obtained based on these drawings without any creative effort.
FIG. 1 is a schematic diagram of a smart floor cleaning device according to an embodiment of the present application.
FIG. 2 is a schematic diagram showing a body of the smart floor cleaning device rotating around a first axis according to an embodiment of the present application.
FIG. 3 is a schematic diagram of the body of the smart floor cleaning device rotating around a second axis according to an embodiment of the present application.
FIG.4 is a schematic diagram showing a relative installation position of two second Hall sensors and a second magnetic component according to an embodiment of the present application.
FIG. 5 is a schematic diagram showing a relative installation position of a first Hall sensor and a first magnetic component according to an embodiment of the present application.FIG. 6 is a flowchart of a control method for a floor cleaning device according to an embodiments of the present application.
FIG. 7 is a diagram showing mapped output powers corresponding to target preset pitch angle ranges and target preset twist angle ranges according to an embodiment of the present application.

### DETAILED DESCRIPTION

Implementations of the present application will now be described clearly and completely with reference to the attached figures. Obviously, the described embodiments are only a part of the embodiments of the present application, rather than all of the embodiments. Based on the embodiments, all other embodiments obtained by one skilled in the art without creative labor will fall within the protection scope of the present application.

In the description of this application, orientations or positional relationships indicated by the terms "center", "longitudinal", "transverse", "length", "width", "thickness", "on", "under", "front", "back", "left", "right", "vertical", "horizontal", "top", "bottom", "inside", "outside", "clockwise", "counterclockwise" are based on the orientations or positional relationships shown in the accompanying drawings. The above terms are only for the convenience of describing and simplifying the present application, and are not intended to indicate or imply that the devices or components referred to must have specific orientations or must be constructed and operated in the specific orientations. Thus, the above terms are not intended to limit the implementation scope of the present application. In addition, the terms "first" and "second" are only used for describing purpose, and not intended to indicate or imply the relative importance or to imply the quantity of the features referred to. Therefore, the feature limited by "first" or "second" can explicitly or implicitly include one or more of the said features. In the description of the present application, "a plurality of" means two or more unless otherwise specified.

In the description of the present application, unless otherwise specified, the terms "install", "fix", and "connect" should be broadly understood as, for example, fixedly connect, detachably connect, or integrally connect. The above terms may also be understood as mechanically connect, electrically connect, or communicatively connect. The above terms may also be understood as directly connect or indirectly connect through an intermediate medium. The above terms may also be understood as communication or interaction between two components. For one skilled in the art, the specific meanings of the above terms in the present application can be understood based on specific circumstances.

In the present application, unless otherwise specified, when a first feature is described as being on or under a second feature, the first feature and the second feature may be in direct contact with each other. The first feature and the second feature may also be in indirect contact with each other through an additional feature therebetween. Moreover, when the first feature is described as being on, above, or over the second feature, the first feature may be directly or diagonally above the second feature, or a horizontal height of the first feature may be large than that of the second feature. When the first feature is described as being under or below the second feature, the first feature may be directly or diagonally below the second feature, or the horizontal height of the first feature may be less than that of the second feature.

The following description provides various embodiments or examples to implement different structures of the present application. Only some components and configurations in the specific embodiment or examples are described below for simplicity. Of course, they are only examples and are not considered as limiting the scope of the present application. In addition, reference numerals have been repeated among different embodiments or examples to indicate corresponding or analogous members for simplicity, and are not intended to indicate the relationship among the different embodiments or examples discussed herein. In addition, the present application also provides examples of various specific processes and materials, but one skilled in the art will realize that other processes and/or materials may also be used.

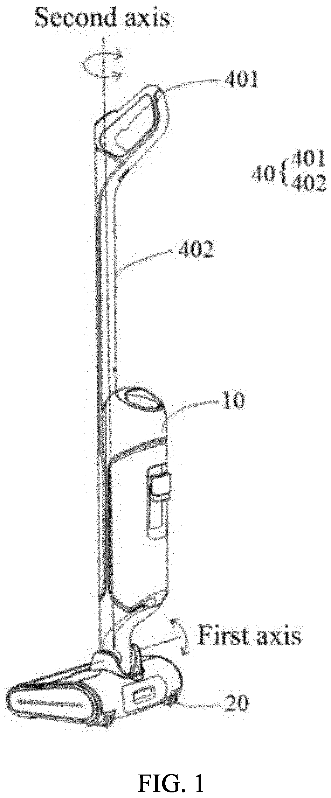

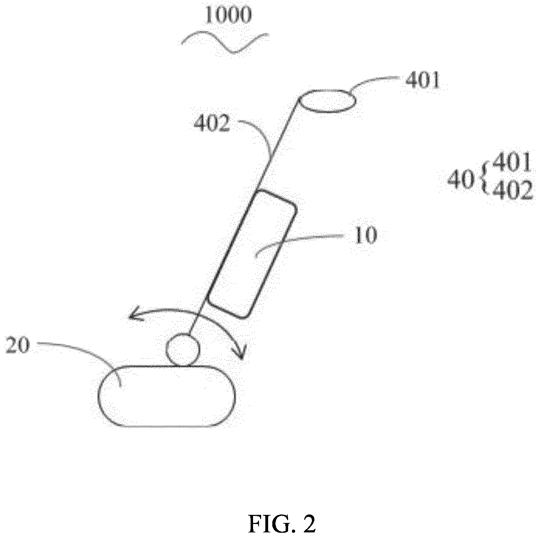

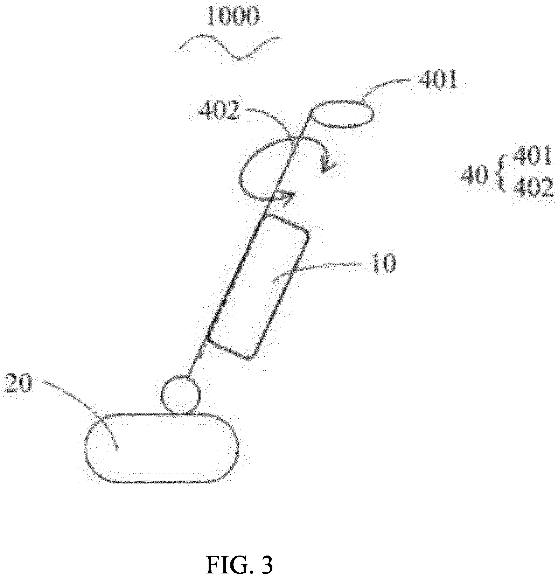

A smart floor cleaning device 1000 is provided according to an embodiment of the present application. Referring to FIGS. 1 to 5, the smart floor cleaning device 1000 includes a body 10, a chassis 20, a processor (not labeled in the figure), a negative pressure source (not labeled in the figure), and a sewage tank (not labeled in the figure) installed on the body 10. The negative pressure source is connected to the sewage tank, and used to apply a negative pressure to draw the sewage during the cleaning process into the sewage tank. For example, the negative pressure source is a fan. The smart floor cleaning device 1000 further includes an angle detection device 30.

The body 10 is hinged to the chassis 20. The processor is installed on the body 10 or the chassis 20. The body 10 can rotate around a first axis and a second axis. For example, as shown in FIG. 1, the body 10 is hinged to the chassis 20 through a structure including a rotating shaft, and an axis of the rotating shaft is the first axis. The body 10 can rotate around the rotating shaft, that is, the body 10 can rotate around the first axis.

Wherein, the first axis and the second axis are perpendicular to each other. As shown in FIG. 1, the smart floor cleaning device 1000 includes a handle assembly 40. The handle assembly 40 includes a handle 401 and a connection rod 402. One end of the connection rod 402 is connected to the handle 401, and another end of the connection rod 402 is connected to the body 10. An axis of the connection rod 402 is the second axis. The position of the second axis is located at the position of the connecting line where the handle 401 is connected to the first axis, and the connection line of the handle 401 is perpendicular to the axis of the rotating shaft. The body 10 can rotate around the second axis relative to the chassis 20.

The angle detection device 30 is installed on the body 10 and/or the chassis 20. The processor is electrically connected to the angle detection device 30, and used to obtain a rotation angle of the body 10 around the first axis and/or the second axis based on the detection signal from the angle detection device 30.

Wherein, when the body 10 rotates rotates around the first axis relative to the chassis 20 and/or the second axis relative to the chassis 20, the detection signal from the angle detection device 30 will change. At this time, the processor can obtain the rotation angle of the body 10 around the first axis and/or the second axis based on the detection signal from the angle detection device 30.

The negative pressure source is electrically connected to the processor. The processor is further used to control an output power of the negative pressure source based on the rotation angle.

Wherein, when the processor obtains the rotation angle of the body 10 around the first axis and/or the second axis based on the detection signal from the angle detection device 30, the processor can control the output power of the negative pressure source based on the rotation angle. When the processor controls the output power of the negative pressure source based on the rotation angle, the value of the output power of the negative pressure source is related to the value of the rotation angle, and the output power of the negative pressure source is not zero.

In some embodiments, the angle detection device 30 includes at least one magnetic component 301 and at least one Hall sensor 302. One of the magnetic component 301 and the Hall sensor 302 is installed on the body 10, and another one of the magnetic component 301 and the Hall sensor 302 is installed on the chassis 20. The processor is electrically connected to the Hall sensor 302 to obtain the rotation angle of the body 10 around the first axis and/or the second axis based on a signal intensity of the signal from the Hall sensor 302.

For example, the magnetic component 301 is installed on the body 10, and the Hall sensor 302 is installed on the chassis 20. Alternatively, the magnetic component 301 is installed on the chassis 20, and the Hall sensor 302 is installed on the body 10.

When the body 10 rotates rotates around the first axis relative to the chassis 20 and/or the second axis relative to the chassis 20, the signal intensity from the Hall sensor 302 will change. At this time, the processor can obtain the rotation angle of the body 10 around the first axis and/or the second axis based on the signal intensity from the Hall sensor 302.

In some embodiments, the at least one magnetic component 301 includes a first magnetic component 3011 and a second magnetic component 3012. The at least one Hall sensor 302 includes a first Hall sensor 3021 corresponding to the first magnetic component 3011 and at least one second Hall sensor 3022 corresponding to the second magnetic component 3012. The rotation angle includes a pitch angle of the body 10 around the first axis and a twist angle of the body 10 around the second axis.

Wherein, when the body 10 rotates around the first axis, if a pitch angle decreases, the surface of the sewage in the sewage tank will approach an air port of the negative pressure source. At this time, if the output power of the negative pressure source is too high, the sewage may enter the interior of the negative pressure source. Therefore, at this time, the output power of the negative pressure source needs to be reduced, thereby preventing the sewage in the sewage tank from entering the interior of the negative pressure source.

In addition, the smart floor cleaning device 1000 further includes a solid waste tank. A partitioning plate is located between the solid waste tank and the sewage tank, and the partitioning plate includes a water outlet in the middle of the partitioning plate. When the smart floor cleaning device 1000 is in operation, the sewage absorbed by the smart floor cleaning device 1000 flows through the solid waste tank and enters the sewage tank through the water outlet. When a twist angle of the body 10 is zero, the sewage in the solid waste tank will accumulate at the water outlet and enter the sewage tank through the water outlet. When the twist angle of the body 10 is greater than zero, the water outlet will rotate together with the body 10, such that the position of the water outlet will raise to be higher than the position where the sewage accumulates. The sewage cannot easily enter the sewage tank from the water outlet, but will accumulate in the solid waste tank. The sewage in the solid waste tank is close to the air port of the negative pressure source. If the output power of the negative pressure source is too high, the sewage will enter the interior of the negative pressure source. Therefore, the probability of the water entering the negative pressure source can be reduced by reducing the output power of the negative pressure source. When the body 10 rotates around the second axis, if the twist angle increases, the sewage will accumulate in the solid waste tank. The larger the twist angle, the more sewage will accumulate in the solid waste tank. The more sewage stored in the solid waste tank, the closer the surface of the sewage relative to the air port of the negative pressure source. At this time, if the output power of the negative pressure source is too high, the sewage will enter the interior of the negative pressure source. Therefore, at this time, the output power of the negative pressure source needs to be reduced, thereby preventing the sewage in the solid waste tank from entering the interior of the negative pressure source.

Wherein, when the body 10 is naturally laid flat on the ground, the pitch angle is 0°. When the body 10 rotates around the first axis and gradually moves away from the ground, the pitch angle gradually increases.

One of the first magnetic component 3011 and the first Hall sensor 3021 is installed on the body 10, and another one of the first magnetic component 3011 and the first Hall sensor 3021 is installed on the chassis 20. The processor is electrically connected to the first Hall sensor 3021, and obtains the twist angle based on a first signal intensity from the first Hall sensor 3021.

For example, the first magnetic component 3011 is installed on the body 10, and the first Hall sensor 3021 is installed on the chassis 20. Alternatively, the first magnetic component 3011 is installed on the chassis 20, and the first Hall sensor 3021 is installed on the body 10.

One of the second magnetic component 3012 and the second Hall sensor 3022 is installed on the body 10, and another one of the second magnetic component 3012 and the second Hall sensor 3022 is installed on the chassis 20. The processor is electrically connected to the second Hall sensor 3022, and obtains the pitch angle based on a second signal intensity from the second Hall sensor 3022.

For example, the second magnetic component 3012 is installed on the body 10, and the second Hall sensor 3022 is installed on the chassis 20. Alternatively, the second magnetic component 3012 is installed on the chassis 20, and the second Hall sensor 3022 is installed on the body 10.

In some embodiments, there are two second Hall sensors 3022. Each of the second Hall sensors 3022 is installed on the chassis 20, and the second magnetic component 3012 is installed on the body 10.

Wherein, since the second magnetic component 3012 has N pole and S pole, a magnetic field sensed by the Hall sensor 3022 will change when the position of the second magnetic component 3012 relative to the second Hall sensor 3022 changes. In one example, there are two second Hall sensors 3022. When the body 10 rotates around the first axis, the positions of the two Hall sensors 3022 relative to the second magnetic component 3012 also change. At this time, the second signal intensities from the two Hall sensors 3022 also change accordingly. When the two Hall sensors 3022 rotate relative to the second magnetic component 3012 by one circle, at any position of the two Hall sensors 3022 with respect to the second magnetic component 3012, the signals generated by the two Hall sensors 3022 are not duplicated. Thus, the twist angle of the body 10 can be accurately identified. Since the two Hall sensors 3022 have different positions with respect to the second magnetic component 3012 (i.e., the pitch angle of the body 10 rotating around the first axis is different), the second signal intensities of the two Hall sensors 3022 are also different. Therefore, the pitch angle of the body 10 rotating around the first axis can be calculated based on the second signal intensities of the two Hall sensors 3022. For example, assuming that the second signal intensities of the two second Hall sensors 3022 are H1 and H2, respectively, the calculation formula for the pitch angle θ is: θ=tan⁻¹ (H1/H2).

In some embodiments, the second magnetic component 3012 is an annular magnet, and an angle formed by lines connecting each of the two second Hall sensors 3022 to the centerline of the annular magnet is greater than 0° and less than or equal to 98°.

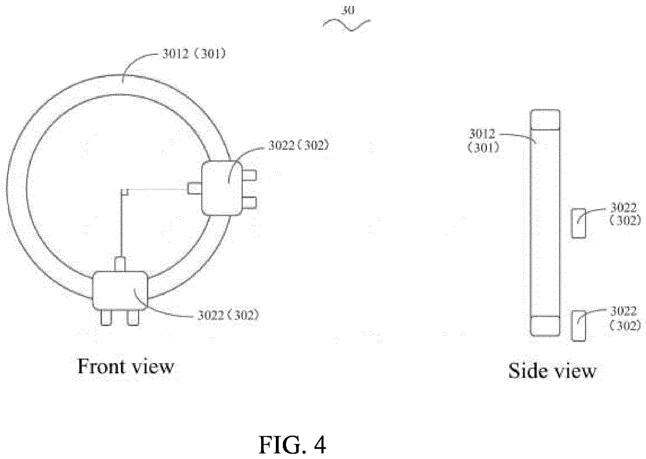

For example, as shown in FIG. 4, the angle formed by the lines connecting each of the two second Hall sensors 3022 to the centerline of the annular magnet is 90 degrees.

In some embodiments, there are two second Hall sensors 3022. Each of the two second Hall sensors 3022 is installed on the body 10, and the second magnetic component 3012 is installed on the chassis 20.

In some embodiments, the first magnetic component 3011 is installed on the chassis 20, and the first Hall sensor 3021 is installed on the body 10. When the twist angle is equal to 0°, the signal intensity from the first Hall sensor 3021 is zero.

If the first magnetic component 3011 is installed on the chassis 20 and the first Hall sensor 3021 is installed on the body 10, when the body 10 rotates relative to the chassis 20 around the first axis, the first Hall sensor 3021 will rotate together with the body 10 and maintain a constant distance from the first magnetic component 3011. During the rotation of the first Hall sensor 3021 together with the body 10, the signal intensity from the first Hall sensor 3021 will linearly change with the twist angle. The processor can calculate the twist angle of the body 10 relative to the chassis 20 around the first axis based on the signal intensity.

In some embodiments, the first magnetic component 3011 is an arc-shaped magnet, which has a curvature greater than or equal to 120°. When the twist angle is equal to 0°, the first Hall sensor 3021 faces the middle position of the first magnetic component 3011.

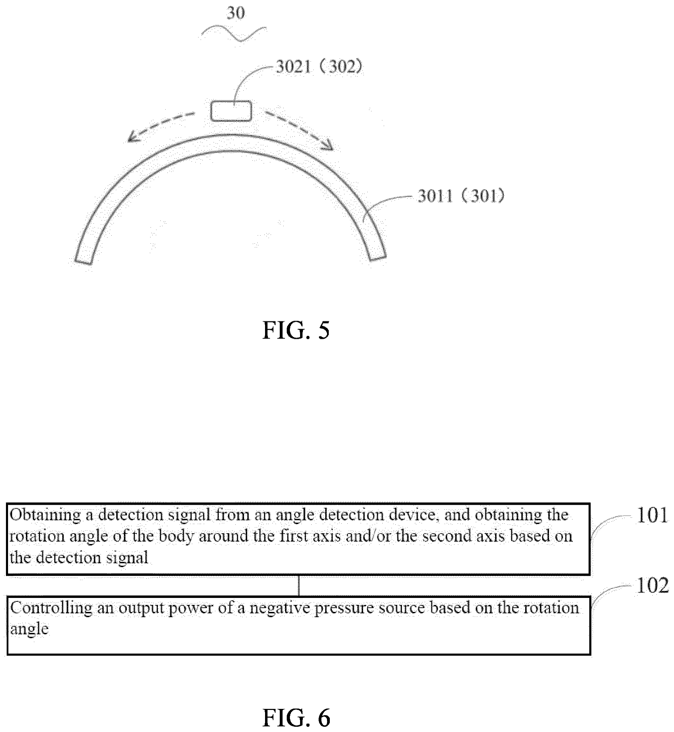

As shown in FIG. 5, the first magnetic component 3011 is an arc-shaped magnet. When the twist angle is equal to 0°, the first Hall sensor 3021 faces the middle position of the arc-shaped magnet. At this time, the body 10 rotated to the left around the second axis is structurally symmetrical with the body 10 rotated to right around the second axis. The twist angle mentioned in the description does not distinguish between the situations that the body 10 rotating to the left or the right. The twist angles with a same value represent the symmetrical positions along two directions.

In some embodiments, the first magnetic component 3011 is installed on the body 10, and the first Hall sensor 3021 is installed on the chassis 20. When the twist angle is equal to 0°, the signal intensity from the first Hall sensor 3021 is zero.

If the first magnetic component 3011 is installed on the body 10 and the first Hall sensor 3021 is installed on the chassis 20, when the body 10 rotates relative to the chassis 20 around the first axis, the first magnetic component 3011 will rotate together with the body 10 and maintain a constant distance from the first Hall sensor 3021. During the rotation of the first magnetic component 3011 together with the body 10, the first signal intensity from the first Hall sensor 3021 will linearly change with the twist angle of the body. The processor can calculate the twist angle of the body 10 relative to the chassis 20 around the first axis based on the first signal intensity.

The optional technical solutions mentioned above may be combined with each other to form other optional embodiments of the present application, which will not be repeated.

It can be seen from the above description that in the smart floor cleaning device 1000 according to the embodiments of the present application, by adding the angle detection device 30 and electrically connecting the angle detection device 30 to the processor of the smart floor cleaning device 1000, the angle detection device 30 obtains the rotation angle of the body 10 of the smart floor cleaning device 1000 around the first axis and/or the second axis. That is, when the body 10 rotates around the first axis and/or the second axis, the detection signal of the angle detection device 30 will change. At this time, the processor collects the detection signal of the angle detection device 30, and then obtains the rotation angle of the body 10 around the first axis and/or the second axis based on the detection signal. Finally, the output power of the negative pressure source is controlled based on the rotation angle. Therefore, when cleaning low areas with the floor cleaning device, there is no need to power off the negative pressure source. Only the output power of the negative pressure source needs to be adjusted according to the rotation angle, thereby greatly improving the cleaning effect.

A floor cleaning device control method is also provided according to an embodiment of the present application, which may be applied to any smart floor cleaning devices mentioned in the above embodiments.

Referring to FIG. 6, which is a flowchart of a control method for the floor cleaning device according to an embodiment of the present application. The method may include the following steps:
Step 101: a detection signal from the angle detection device is obtained. A rotation angle of the body around the first axis and/or the second axis is obtained based on the detection signal.
   Wherein, the first axis and the second axis are perpendicular to each other.
Step 102: an output power of the negative pressure source is controlled based on the rotation angle.

**In** some embodiments, obtaining the detection signal from the angle detection device, and obtaining the rotation angle of the body around the first axis and/or the second axis based on the detection signal may include:
Obtaining a first signal intensity from a first Hall sensor of the angle detection device, and obtaining a twist angle of the body rotating around the second axis based on the first signal intensity; and
Obtaining a second signal intensity from a second Hall sensor of the angle detection device, and obtaining a pitch angle of the body rotating around the first axis based on the second signal intensity.

Controlling the output power of the negative pressure source based on the rotation angle may include:
Controlling the output power of the negative pressure source based on the pitch angle and the twist angle.

Wherein, when there are two second Hall sensors in the angle detection device, assuming that the second signal intensities from the two second Hall sensors are H1 and H2, respectively, the calculation formula for the pitch angle θ of the body rotating around the first axis is: θ=tan⁻¹ (H1/H2).

In some embodiments, before controlling the output power of the negative pressure source based on the pitch angle and the twist angle, the method further includes:
Obtaining a plurality of preset pitch angle ranges and a plurality of preset twist angle ranges;
Comparing the pitch angle with the preset pitch angle ranges to determine a target preset pitch angle range from the preset pitch angle ranges that contains the pitch angle, and comparing the twist angle with the preset twist angle ranges to determine a target preset twist angle range from the preset twist angle ranges that contains the twist angle.

Controlling the output power of the negative pressure source based on the pitch angle and the twist angle may include:
Controlling the output power of the negative pressure source based on the target preset pitch angle range and the target preset twist angle range.

For example, there are three preset pitch angle ranges, that is, 0° to 5°, 5° to 20°, and 20° to 30°, respectively. The pitch angle is equal to 15°, such that the target preset pitch angle range that includes the pitch angle (i.e., 15°) is 5° to 20°. For example, there are three preset twist angle ranges, that is, 0° to 10°, 10° to 30°, and 30° to 90°. The twist angle is equal to 45°, such that the target preset twist angle range that includes the twist angle (i.e., 45°) is 30° to 90°.

Wherein, one skilled in the art may set the preset pitch angle ranges and the preset twist angle ranges according to actual situations, which are not limited.

In some embodiments, controlling the output power of the negative pressure source based on the target preset pitch angle range and the target preset twist angle range includes:
Obtaining a mapped output power corresponding to the target preset pitch angle range and the target preset twist angle range; and
Determining the mapped output power as the output power of the negative pressure source.

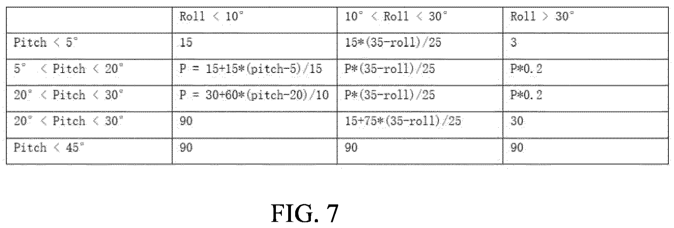

For example, as shown in FIG. 7, wherein the column "Pitch" is the target preset pitch angle, and the row "Roll" is the target preset twist angle. Pitch<5° means that the target preset pitch angle range 0° to 5°, and Roll<10° means that the target preset twist angle range is 0° to 10°. At this time, the mapped output power corresponding to the target preset pitch angle range of 0° to 5° and the target preset twist angle range of 0° to 10° is 15 watts.

As shown in FIG. 7, in some embodiments, the smaller the target preset pitch angle range and the larger the target preset twist angle range, the smaller the corresponding mapped output power.

Wherein, when the target preset pitch angle range is smaller and the target preset twist angle range is larger, it indicates that the cleaning area cleaned by the floor cleaning device at this time is lower. At this time, in order to prevent water from entering the negative pressure source, the output power of the negative pressure source needs to be reduced.

In some embodiments, after determining the mapped output power as the output power of the negative pressure source, the method further includes:
Obtaining a time duration in which the body maintains at the target preset pitch angle range and the target preset twist angle range;
Comparing the time duration with a preset time duration;
Maintaining the output power of the negative pressure source when the time duration is less than the preset time duration; and
Determining the mapped output power as the output power of the negative pressure source when the time duration is greater than the preset time duration.

Wherein, since changes in the output power may cause changes in sound, in order to avoid poor user experience caused by too fast response of the output power of the negative pressure source, a strategy of time delay has been added. Only when the body maintains at the target preset pitch angle range and the target preset twist angle range for a time duration greater than the preset time duration, will the output power of the negative pressure source be adjusted to the mapped output power. Otherwise, the original output power will remain unchanged.

Wherein, one skilled in the art may set the preset time duration according to the actual situation, which is not limited.

A detailed introduction to the smart floor cleaning device and the control method thereof according to the embodiments of the present application have been set forth in the foregoing description. The description explains the principles and implementation methods of the present application by specific examples. The above examples are illustrative only to help understand the methods and core ideas of the present application. Meanwhile, changes may be made in matters of the specific implementation methods and the application scope within the principles of the present application. In summary, the content of the description should not be understood as any limitation to the present application.

## Claims

1. A smart floor cleaning device, comprising:
a body, a chassis, a processor, a negative pressure source, and a sewage tank installed on the body, wherein the negative pressure source is connected to the sewage tank and configured to apply a negative pressure source to draw sewage during a cleaning process into the sewage tank;
**characterized in that**, the smart floor cleaning device further comprising an angle detection device,
wherein the body is hinged to the chassis, the processor is installed on the body or the chassis, and the body is configured to rotate around a first axis and a second axis;
the angle detection device is installed on at least one of the body and the chassis, wherein the processor is electrically connected to the angle detection device and configured to obtain a rotation angle of the body rotating around at least one of the first axis and the second axis based on a detection signal of the angle detection device;
wherein the negative pressure source is electrically connected to the processor, and the processor is further configured to control an output power of the negative pressure source based on the rotation angle;
wherein the first axis and the second axis are perpendicular to each other.

2. The smart floor cleaning device according to claim 1, **characterized in that**, the angle detection device comprises a magnetic component and a Hall sensor;
one of the magnetic component and the Hall sensor is installed on the body, another one of the magnetic component and the Hall sensor is installed on the chassis, the processor is electrically connected to the Hall sensor and configured to obtain the rotation angle of the body around at least one of the first axis and the second axis based on a signal intensity from the Hall sensor.

3. The smart floor cleaning device according to claim 2, **characterized in that**, the magnetic component comprises a first magnetic component and a second magnetic component, the Hall sensor comprises a first Hall sensor corresponding to the first magnetic component and at least one second Hall sensor corresponding to the second magnetic component;
the rotation angle comprises a pitch angle of the body rotating about the first axis and a twist angle of the body rotating about the second axis;
one of the first magnetic component and the first Hall sensor is installed on the body, another one of the first magnetic component and the first Hall sensor is installed on the chassis, the processor is electrically connected to the first Hall sensor and configured to obtain the twist angle based on a first signal intensity from the first Hall sensor;
one of the second magnetic component and the at least one second Hall sensor is installed on the body, another one of the second magnetic component and the at least one second Hall sensor is installed on the chassis, the processor is electrically connected to the at least one second Hall sensor and configured to obtain the pitch angle based on a second signal intensity from the at least one second Hall sensor.

4. The smart floor cleaning device according to claim 3, **characterized in that**, the at least one second Hall sensor comprises two second Hall sensors;
the two second Hall sensors are installed on the chassis, and the second magnetic component is installed on the body.

5. The smart floor cleaning device according to claim 4, **characterized in that**, the second magnetic component is an annular magnet;
an angle defined by lines connecting each of the two second Hall sensors to a centerline of the annular magnet is greater than 0° and less than or equal to 98°.

6. The smart floor cleaning device according to claim 3, **characterized in that**, the at least one second Hall sensor comprises two second Hall sensors;
the two second Hall sensors are installed on the body, and the second magnetic component is installed on the chassis.

7. The smart floor cleaning device according to claim 3, **characterized in that**, the first magnetic component is installed on the chassis, the first Hall sensor is installed on the body, and the first Hall sensor outputs the detection signal having the signal intensity of zero when the twist angle is equal to 0°.

8. The smart floor cleaning device according to claim 3, **characterized in that**, the first magnetic component is an arc-shaped magnet with a curvature greater than or equal to 120°, and the first Hall sensor faces a middle position of the first magnetic component when the twist angle is equal to 0°.

9. The smart floor cleaning device according to claim 3, **characterized in that**, the first magnetic component is installed on the body, the first Hall sensor is installed on the chassis, and the first Hall sensor outputs the detection signal having the signal intensity of zero when the twist angle is equal to 0°.

10. A control method for a floor cleaning device according to any one of claims 1 to 9, **characterized by** comprising:
obtaining the detection signal from the angle detection device, and obtaining the rotation angle of the body rotating around at least one of the first axis and the second axis based on the detection signal;
controlling the output power of the negative pressure source based on the rotation angle.

11. The control method for the floor cleaning device according to claim 10, **characterized in that**, obtaining the detection signal of the angle detection device, and obtaining the rotation angle of the body around at least one of the first axis and the second axis based on the detection signal comprising:
obtaining a first signal intensity from a first Hall sensor in the angle detection device, and obtaining a twist angle of the body rotating around the second axis based on the first signal intensity; and
obtaining a second signal intensity from the second Hall sensor in the angle detection device, and obtaining a pitch angle of the body rotating around the first axis based on the second signal intensity;
controlling the output power of the negative pressure source based on the rotation angle comprises:
controlling the output power of the negative pressure source based on the pitch angle and the twist angle.

12. The control method for the floor cleaning device according to claim 11, **characterized in that**, before controlling the output power of the negative pressure source based on the pitch angle and the twist angle, the control method further comprises:
obtain a plurality of preset pitch angle ranges and a plurality of preset twist angle ranges;
comparing the pitch angle with the plurality of preset pitch angle ranges to determine a target preset pitch angle range from the plurality of preset pitch angle ranges which contains the pitch angle; and
comparing the twist angle with the plurality of preset twist angle ranges to determine a target preset twist angle range from the plurality of preset twist angle ranges which contains the twist angle;
controlling the output power of the negative pressure source based on the pitch angle and the twist angle comprises:
controlling the output power of the negative pressure source based on the target preset pitch angle range and the target preset twist angle range.

13. The control method for the floor cleaning device according to claim 12, **characterized in that**, controlling the output power of the negative pressure source based on the target preset pitch angle range and the target preset twist angle range comprises:
obtaining a mapped output power corresponding to the target preset pitch angle range and the target preset twist angle range based on a preset mapping relationship;
determining the mapped output power as the output power of the negative pressure source.

14. The control method for the floor cleaning device according to claim 13, **characterized in that**, the smaller the target preset pitch angle range and the larger the target preset twist angle range, the smaller the corresponding mapped output power.

15. The control method for the floor cleaning device according to claim 13, **characterized in that**, after determining the mapped output power as the output power of the negative pressure source, the control method further comprises:
obtain a time duration in which the body maintains at the target preset pitch angle range and the target preset twist angle range;
comparing the time duration with a preset time duration;
maintaining the output power of the negative pressure source unchanged in response to the time duration being less than the preset time duration; and
determining the mapped output power as the output power of the negative pressure source in response to the time duration being greater than the preset time duration.
